# DEMANDE DE BREVET EUROPEEN

(11) **EP 0 723 051 A1**
(43) Date de publication de la demande: **24.07.1996**
(21) Numéro de dépôt: 95402707.4
(22) Date de dépôt: 30.11.1995
(51) Int. Cl.: E04B 7/16, E05F 15/14

(54) **Dispositif de commande pour toiture à ouvrant mobile**

(30) Priorité: 01.12.1994 FR 9414469; 15.12.1994 FR 9415136
(71) Demandeur: ALCAN FRANCE, F-31037 Toulouse Cedex (FR)
(72) Inventeur: Lourenco, Jean-Louis, F-31270 Frouzins (FR); Pacheco, Jose Manuel, F-31560 Nailloux (FR)
(74) Mandataire: Desaix, Anne

(57) **Abrégé**

Ce dispositif comporte, de chaque côté de la toiture, une structure de support (3) avec un chevron supérieur (11) d'un seul tenant, supportant un profilé (14) comportant au moins un rail (15), recevant une courroie crantée (28), bouclée sur elle-même et coopérant avec un pignon d'entraînement (30) prévu à l'extrémité d'une barre de commande et de transmission transversale (44), les extrémités de la courroie étant solidarisées l'une et l'autre à une pièce de jonction commune (39), fixée à l'ouvrant (2), de telle sorte que le mouvement du pignon entraînant la courroie provoque le déplacement de la pièce de jonction vis-à-vis du rail et par suite le mouvement de l'ouvrant qui glisse sous un élément fixe de la toiture, en s'appuyant sur la courroie logée à l'intérieur de ce rail.

## Description

La présente invention est relative à un dispositif de commande de l'ouvrant d'une toiture, de type véranda ou analogue, comportant une structure de support sur laquelle repose cette toiture, avec une partie fixe généralement plane, de préférence légèrement inclinée sur l'horizontale pour assurer l'écoulement des eaux de pluie extérieures et habituellement liée à un mur de soutien contre lequel est bâtie la véranda, et une partie mobile constituant l'ouvrant, adaptée à coulisser sous la partie fixe, parallèlement à celle-ci, pour découvrir de façon correspondante la toiture et faire communiquer l'intérieur de la structure de support avec l'environnement ambiant, à travers l'ouverture ainsi créée.

On connaît déjà dans la technique de nombreux systèmes à toiture ouvrante de ce genre, dans lesquels la structure de support comporte des chevrons, portés par des moyens d'appui au sol, ces chevrons faisant office de rails sur lesquels glisse l'ouvrant mobile pour se loger sous la partie fixe de la véranda lorsque la toiture est ouverte, les dimensions de cette partie fixe et de l'ouvrant mobile pouvant être du même ordre de grandeur, de manière à assurer une ouverture maximale sur sensiblement la moitié de la surface de cette toiture.

Toutefois, dans ces réalisations connues, la commande de l'ouvrant est réalisée par des câbles, courroies ou chaînes qui sont plus ou moins apparents, notamment leurs organes de motorisation et d'entraînement, lesquels exigent pour leur montage et leur support des profilés de grande largeur, peu esthétiques et de fabrication complexe.

La présente invention a pour objet un dispositif de commande perfectionné qui évite ces inconvénients, en particulier grâce à un faible encombrement des pièces mises en oeuvre, en permettant une complète intégration des divers mécanismes utilisés, logés directement dans les profilés de la structure de support, ce qui facilite la fabrication et la pose du dispositif et améliore l'esthétique de l'ensemble.

A cet effet le dispositif considéré, pour la commande d'une toiture comportant une structure de support et d'appui au-dessus du sol d'un élément de couverture fixe, de forme générale plane, de préférence réuni selon un de ses côtés à un mur porteur vertical contre lequel s'applique la structure, et un ouvrant mobile, parallèle à l'élément fixe, apte à coulisser sur la structure de support pour se disposer sous l'élément fixe en position d'ouverture de la toiture ou dans le prolongement de celui-ci en position de fermeture, sous l'effet d'un mécanisme de commande porté par la structure de support et provoquant le déplacement de l'ouvrant vis-à-vis de l'élément fixe, se caractérise en ce que, de chaque côté de la toiture, la structure de support comporte sous l'élément fixe un chevron supérieur d'un seul tenant, supportant un profilé comportant au moins un rail, délimitant un logement ouvert recevant une courroie crantée, bouclée sur elle-même et coopérant avec un pignon d'entraînement prévu à l'extrémité d'une barre de commande et de transmission transversale, s'étendant parallèlement au côté de l'élément fixe réuni au mur porteur et au voisinage de celui-ci, les extrémités de la courroie étant solidarisées l'une et l'autre à une pièce de jonction commune, fixée à l'ouvrant, de telle sorte que le mouvement du pignon entraînant la courroie provoque le déplacement de la pièce de jonction vis-à-vis du rail et par suite le mouvement de l'ouvrant qui glisse dans le logement ouvert du rail sous l'élément fixe, en s'appuyant sur la courroie logée à l'intérieur de ce rail.

Grâce à ces dispositions, le chevron d'appui de la toiture, supportant un profilé creux formant rail, loge entièrement les moyens de commande de l'ouvrant mobile, constitués d'une simple courroie crantée montée dans ce rail et dont le mouvement en rotation continue, dans un sens ou dans l'autre selon le déplacement à réaliser pour l'ouvrant, entraîne directement celui-ci qui repose en permanence sur la courroie, sous l'élément fixe lui-même monté au-dessus du profilé du chevron. La commande de la courroie crantée s'effectue par une barre transversale qui peut être elle-même commandée par un moteur tubulaire ou autre, en étant disposée avec ce moteur sous l'élément fixe, au voisinage du bord de celui-ci réuni au mur porteur ou analogue contre lequel s'appuie la toiture de la véranda, de telle sorte que la barre et le moteur soient totalement invisibles de l'extérieur.

Selon une caractéristique particulière de l'invention, le rail formé dans le profilé creux du chevron supérieur comporte au moins un et de préférence plusieurs galets lisses d'appui pour l'ouvrant dans son mouvement vers ou à partir de l'élément fixe.

Avantageusement et selon une autre caractéristique également, le rail du profilé creux est isolé de l'ouvrant par des moyens propres à assurer une rupture de pont thermique, du type à barrettes plastiques ou autres.

Dans un mode de réalisation préféré de l'invention, la courroie de commande crantée, logée à l'intérieur du rail du profilé creux du chevron est en prise d'une part avec le pignon d'entraînement, et d'autre part avec un second pignon, d'axe parallèle à celui du pignon d'entraînement, ce second pignon étant monté libre en rotation et associé à un mécanisme de tension de la courroie par déplacement de cet axe.

Selon encore une autre caractéristique, le pignon d'entraînement est directement constitué par l'extrémité de la barre de commande et de transmission, qui présente extérieurement un profil muni de cannelures à ses deux extrémités. Les pignons ainsi formés à ces extrémités sont en prise, respectivement de chaque côté de la toiture, avec deux courroies crantées homologues, de manière à assurer un déplacement de l'ouvrant mobile qui reste toujours perpendiculaire à la direction de la barre de commande et parallèle aux rails des profilés creux.

Avantageusement, la barre de commande et de transmission est supportée à chacune de ses extrémités latérales dans un palier lisse en U, monté dans le rail et recevant une bague de frottement entourant un coussinet muni d'un cran de liaison avec au moins une cannelure de la barre.

De préférence également, chaque rail comporte à chacune de ses extrémités une butée fixe d'arrêt de l'ouvrant en fin de course.

Selon une caractéristique complémentaire, le rail du profilé creux du chevron supérieur est constitué de deux demi-rails dans le prolongement l'un de l'autre, respectivement au droit de l'élément fixe et de l'ouvrant mobile en position de fermeture de la toiture, le demi-rail disposé sous l'élément fixe comportant une cloison verticale pour le soutien de cet élément.

En outre, le demi-rail inférieur est avantageusement muni d'un cache supérieur amovible, apte à être fixé par clip ou analogue sur ce demi-rail, afin de coiffer l'ouvrant par le dessus de celui-ci, l'ouvrant comportant de préférence des joints d'étanchéité glissant sur le cache ou vice-versa.

L'invention concerne également un mécanisme de manoeuvre du pignon d'entraînement, pouvant être avantageusement mis en oeuvre dans le dispositif de commande considéré, pour assurer le déplacement de l'ouvrant mobile coulissant sur la structure de support, ce pignon d'entraînement recevant son mouvement par l'intermédiaire d'une chaîne ou d'un organe de transmission similaire, lui-même entraîné par un pignon de commande approprié.

Pour limiter la place nécessaire pour loger le mécanisme de manoeuvre, ce pignon de commande est généralement mis en rotation par un moteur tubulaire, dont l'axe de sortie est solidaire du pignon, ce moteur étant lui-même disposé longitudinalement sous ou au voisinage du panneau coulissant, en étant solidaire de la structure de support, de telle sorte qu'il ne déborde pas latéralement de celle-ci. Il comporte habituellement des organes de fin de course intégrés, destinés à stopper le moteur et inverser son sens de rotation dans les positions extrêmes de déplacement du panneau.

En cas de coupure de l'alimentation électrique ou de défaillance du moteur, celui-ci se bloque en position, le panneau restant, selon le cas, dans une situation intermédiaire entre l'ouverture et la fermeture.

Dans certaines solutions connues et pour pallier cet inconvénient, on a déjà prévu d'associer au moteur tubulaire une commande de secours constituée notamment par un treuil manuel, qui est alors nécessairement disposé sur le côté du tube contenant le moteur.

Toutefois, l'ensemble est dans ce cas particulièrement encombrant.

L'invention prévoit donc un perfectionnement dans lequel on utilise toujours un moteur tubulaire mais en intégrant à celui-ci un mécanisme à commande manuelle, apte à prendre immédiatement le relais du moteur défaillant en cas de blocage ou d'arrêt non provoqué de celui-ci, ce mécanisme permettant de réaliser de façon simple, rapide et sûre, le débrayage du moteur électrique, c'est-à-dire sa désolidarisation d'avec l'axe de pignon de commande, l'embrayage sur cet axe ainsi désaccouplé d'un ensemble roue dentée-vis sans fin à commande manuelle pour la manoeuvre du panneau coulissant, aussi bien que, en sens inverse, le désaccouplement de la roue et le réembrayage du moteur, une fois celui-ci réparé et remis en route, ou après rétablissement de l'alimentation électrique accidentellement coupée.

Selon une disposition préférée, le pignon d'entraînement, est commandé au moyen d'un moteur tubulaire muni d'organes de fins de course propres à arrêter et inverser son sens de rotation, ce moteur étant logé dans un tube extérieur comportant une bague d'entraînement pour un axe portant le pignon de commande et un organe de couplage interne solidaire du tube extérieur, cet organe de couplage comprenant des moyens de liaison, soit avec la bague d'entraînement de l'axe, soit avec une roue dentée à commande manuelle au moyen d'une vis tangente, elle-même commandée par une manivelle, le dispositif comprenant également un manchon coaxial à l'axe et entourant celui-ci qui peut librement tourner dans ce manchon, lequel est solidaire en translation de l'organe de couplage et apte à se déplacer par rapport à la direction de cet axe sous l'effet d'un téton porté par la roue dentée et coopérant avec une rainure en hélice prévue dans le manchon, de telle sorte que, selon le sens de la rotation de la roue provoqué par la vis tangente, l'organe de couplage solidarise le tube extérieur, respectivement de la roue dentée ou de la bague d'entraînement.

Le dispositif permet ainsi, en cas de défaillance du moteur n'entraînant plus l'axe portant le pignon de commande, de relier celui-ci à un mécanisme d'entraînement manuel à roue dentée-vis tangente, tout en commandant simultanément le tube extérieur, de manière à conserver la mémoire des fins de course du moteur pour arrêter le panneau mobile dans l'une ou l'autre des positions qu'il ne peut franchir, lors de son coulissement, par rapport à la structure de support fixe.

Le système peut notamment permettre de désolidariser la commande manuelle à tout moment vis-à-vis du tube extérieur, lorsque le moteur est réactivé, la bague d'entraînement de celui-ci étant alors à nouveau solidarisée du tube extérieur grâce au déplacement en sens inverse de l'organe de couplage par rapport au pignon.

Selon une autre caractéristique, l'organe de couplage entraînant l'axe en rotation présente deux faces parallèles opposées, perpendiculaires à cet axe et comporte, sur chacune de ces deux faces, au moins un pion en saillie vers l'extérieur de l'une et de l'autre, en regard de la bague d'entraînement d'une part et de la roue dentée d'autre part.

Avantageusement, les pions en saillie de l'organe de couplage sont logés dans un alésage transversal de cet organe, déporté radialement par rapport à l'axe du pignon et sont soumis en permanence à l'effet d'un ressort de poussée vers l'extérieur de l'alésage.

Selon une autre caractéristique, la bague d'entraînement comporte une pluralité de logements équidistants ou une fente continue en arc de cercle, ces logements étant répartis autour de l'axe, de manière à recevoir dans l'un d'entre eux le pion en regard de l'organe de couplage et solidariser cette bague de cet organe.

De façon similaire, la roue dentée est associée à une bague de synchronisation, montée libre en rotation sur la surface externe du manchon et apte à être solidarisée de la roue par un doigt porté par cette bague, engagé dans une rainure en arc de cercle de la roue, contenant un ressort de rappel en appui latéral sur ce doigt pour provoquer la rotation relative de la bague de synchronisation par rapport au manchon coaxial à l'axe, cette bague de synchronisation comportant dans sa face opposée à la roue un ensemble de trous pour recevoir le second pion en regard de l'organe de couplage.

Selon un mode de réalisation particulier, la roue dentée présente un alésage interne radial, fileté, propre à recevoir le téton de commande du déplacement du manchon, ce téton portant extérieurement un pas de vis correspondant au filetage de l'alésage et ayant son extrémité engagée dans la rainure en hélice du manchon, de manière que la rotation de la roue par rapport au manchon se traduise par un déplacement axial de celui-ci, dans un sens ou dans l'autre, selon la direction de cette rotation.

De préférence et dans le mode de réalisation ci-dessus, le manchon comporte un ensemble de rainures longitudinales, réparties dans sa surface externe, ces rainures étant ménagées du côté de la roue dentée opposée à la bague de synchronisation et étant destinées à recevoir un doigt de freinage, porté par un corps cylindrique solidaire de la structure de support, et dans un logement transversal duquel est montée la roue dentée, ce corps étant muni d'un passage évidé axialement recevant le manchon consécutivement à son déplacement sous l'effet du téton de commande, ce corps supportant en outre la vis tangente de commande de cette roue.

Dans une variante de réalisation, le téton de commande porté par la roue dentée, coopérant avec la rainure en hélice du manchon, comporte une tête logée dans un évidement de la roue dentée décalé par rapport au manchon, et soumise à l'effet de poussée d'un ressort radial, monté dans cet évidement, de telle sorte que, à la fin du déplacement du manchon par rapport à l'axe, l'effort exercé sur le téton par l'extrémité de la rainure en hélice provoque un effacement de ce téton dans l'évidement hors de la rainure, en comprimant le ressort radial.

D'autres caractéristiques d'un dispositif de commande pour toiture à ouvrant mobile, établi conformément à l'invention, apparaîtront encore à travers la description qui suit d'un exemple de réalisation, donné à titre indicatif et non limitatif, en référence aux dessins annexés sur lesquels :
- La Figure 1 est une vue schématique en perspective d'une toiture selon l'invention.
- La Figure 2 est une vue en coupe longitudinale partielle, à plus grande échelle, de la toiture selon la Figure 1, illustrant notamment la courroie de commande réalisant l'entraînement de l'ouvrant par l'intermédiaire d'une pièce de jonction avec celui-ci.
- La Figure 3 est une vue de dessus de l'ouvrant mobile et des chevrons de la structure de support sur lesquels coulisse cet ouvrant.
- La Figure 4 est une vue en coupe transversale de l'ouvrant et de ses chevrons, dans un mode de réalisation particulier, illustrant une variante de mise en oeuvre.
- La Figure 5 est une vue de détail de la courroie crantée et de son pignon d'entraînement.
- La Figure 6 illustre un autre détail pour le montage de la barre de commande et de transmission du dispositif.
- La Figure 7 est une vue en coupe à plus grande échelle de cette barre, illustrant en particulier le profil de sa section.
- La Figure 8 est une vue en coupe transversale schématique de la structure de support déjà représentée sur la Figure 2, mais sur laquelle le pignon de commande du pignon d'entraînement est représenté coopérant avec une vis tangente, apte à être entraînée au moyen d'une tige et d'une manivelle pour la manoeuvre manuelle de l'ouvrant, en cas de défaillance du moteur assurant le mouvement du mécanisme.
- La Figure 9 est une vue de dessus de la Figure 8, illustrant également schématiquement la structure du moteur tubulaire et du mécanisme de commande manuelle associé.
- La Figure 10 est une vue en coupe axiale, à plus grande échelle, du mécanisme et des diverses pièces permettant de l'accoupler ou de le désaccoupler du moteur tubulaire.
- La Figure 11 est une vue en coupe transversale de la bague de synchronisation, selon la ligne XI-XI de la Figure 10.
- Les Figures 12 et 13 sont des vues simplifiées de la Figure 10, permettant d'expliciter le fonctionnement du dispositif.
- La Figure 14 illustre une variante de réalisation du mécanisme considéré.

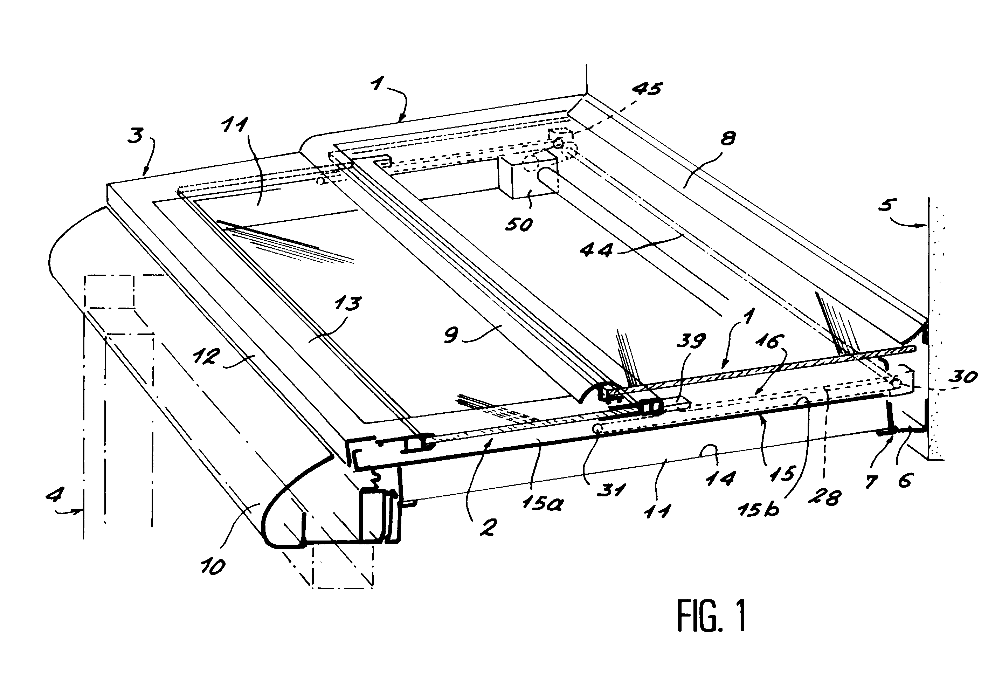

Sur ces Figures et plus particulièrement sur les Figures 1 à 4, on peut voir que le dispositif selon l'invention, constituant la toiture d'une véranda ou analogue, comporte essentiellement un élément fixe 1, d'un ouvrant mobile 2, permettant de se déplacer vis-à-vis de l'élément fixe pour se placer partiellement ou totalement sous ce dernier et d'une structure de support 3, laquelle repose sur le sol (non représenté) par des poteaux d'appui 4, l'élément fixe de forme générale plane étant disposé au voisinage d'un mur de soutènement 5 contre lequel est bâtie et adossée la véranda. De préférence, les dimensions de l'élément fixe et de l'ouvrant, l'un et l'autre de forme générale rectangulaire, sont pratiquement identiques, en tout cas voisines, de telle sorte que, lorsque l'ouvrant est disposé sous l'élément fixe, l'ouverture de la toiture soit maximale.

Avantageusement mais à titre d'exemple seulement, tout autre montage étant bien entendu possible, l'ensemble de la toiture repose sur une console de support 6 fixée au mur 5, par l'intermédiaire d'une liaison 7 articulée permettant d'ajuster la pente de l'élément fixe 1, en fonction de la hauteur des poteaux d'appui 4, pour faciliter l'écoulement des eaux de pluie extérieures.

Une bavette 8 fixée au mur et en appui sur une portée de l'élément fixe 1, assure l'étanchéité à la liaison avec ce mur, tandis qu'une parclose 9 montée contre le bord opposé de cet élément, se rebat vers l'ouvrant mobile 2 en protégeant le bord correspondant de l'élément fixe 1.

Un élément décoratif 10 est prévu en bout de la structure de support 3, au-delà de l'ouvrant mobile 2.

La structure de support 3 comporte essentiellement, selon chacun des côtés de la toiture, des chevrons supérieurs tels que 11, délimitant entre eux, un retour transversal 12 et le mur 5, une ouverture centrale 13, laquelle peut être ouverte ou fermée, dans le prolongement de l'élément fixe 1 par l'ouvrant mobile 2 selon la position relative de ce dernier par rapport à cet élément et notamment selon qu'il est amené sous ce dernier ou au contraire décalé vers l'avant de celui-ci, en obturant alors complètement cette ouverture.

Les deux chevrons supérieurs 11 de l'ensemble sont identiques, un seul d'entre eux étant décrit ci-après, ces chevrons assurant ensemble le support et le guidage de l'ouvrant mobile 2 au cours de son mouvement vers ou à partir de l'élément fixe 1.

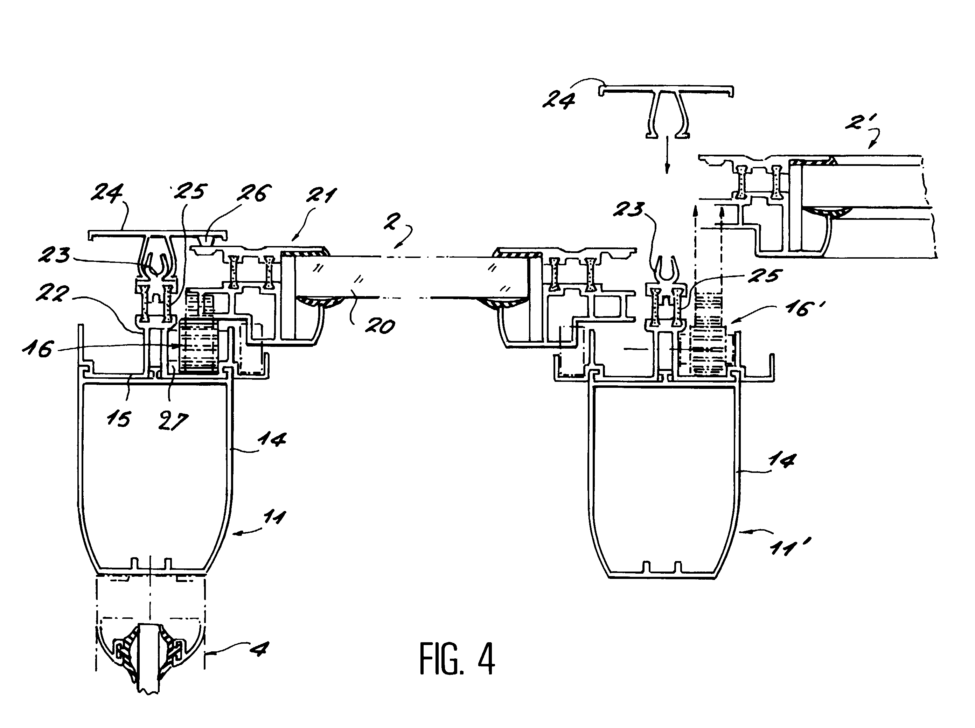

A cet effet, chaque chevron 11 est constitué ou supporte un profilé métallique creux 14, dont la Figure 4 illustre à plus grande échelle la section, ce profilé comportant, à son extrémité supérieure, un rail 15 ouvert vers l'extérieur et dans lequel peut être logé un mécanisme 16 permettant d'assurer la commande de l'ouvrant dans ses mouvements, et dont le détail de la réalisation sera précisé ci-après.

De préférence, le rail 15 est en réalité formé de deux demi-rails 15a, 15b, disposés dans le prolongement l'un de l'autre et prévus respectivement sous l'ouvrant 2 pour l'un, sous l'élément fixe 1 pour l'autre, lorsque cet ouvrant est lui-même sensiblement dans le prolongement de l'élément fixe, la toiture étant fermée. Une cloison de séparation (non représentée) s'étend verticalement à partir du demi-rail 15b surmonté de l'élément fixe, pour assurer l'immobilisation de cet élément vis-à-vis du chevron de support 11 supportant le rail 15.

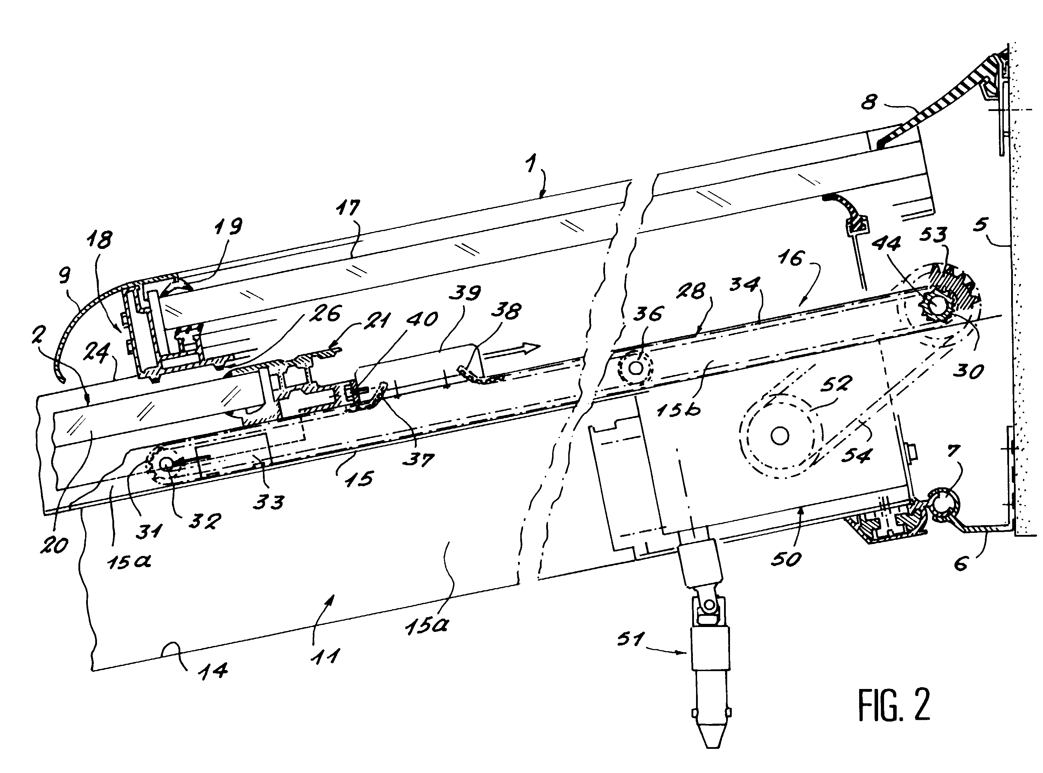

L'élément fixe 1 est avantageusement constitué d'une partie vitrée 17, montée dans un châssis d'immobilisation 18 comprenant divers joints d'étanchéité 19 (voir Figure 2), dont le détail de la réalisation importe peu en elle-même à l'invention.

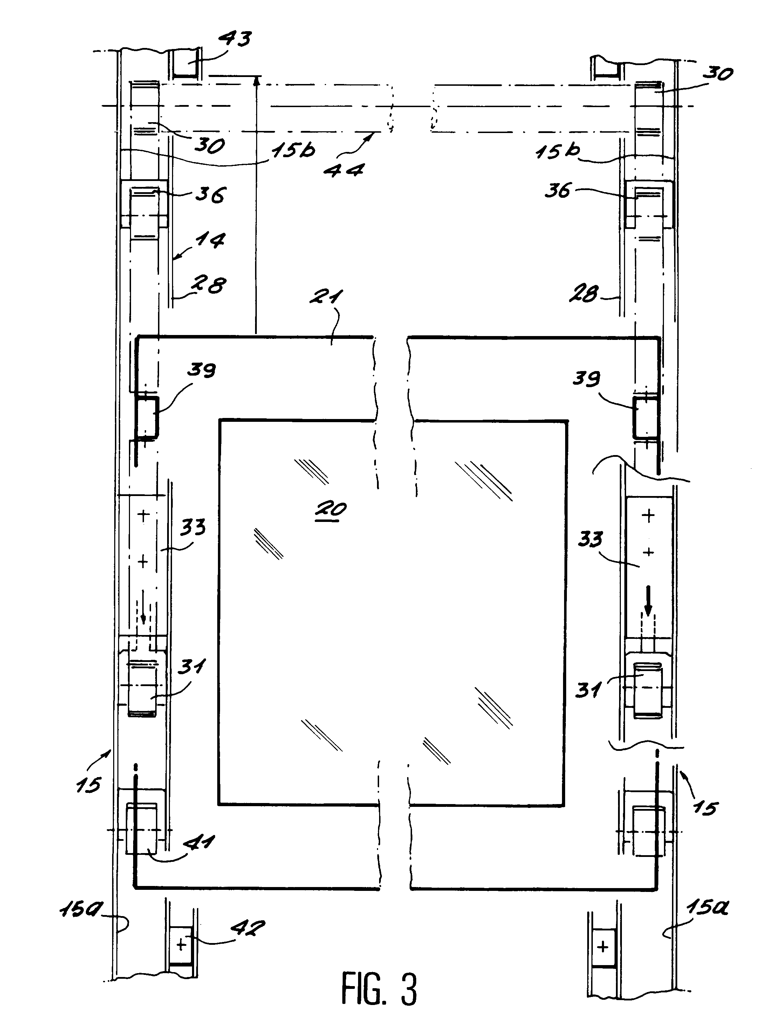

De même, l'ouvrant mobile 2 comporte une partie centrale également vitrée 20, fixée dans un châssis 21 (Figure 3), dont à nouveau le détail n'a pas d'incidence directe sur les caractéristiques précises du dispositif considéré.

Toutefois et de façon avantageuse, quoiqu'en elle même classique dans la technique, le rail 15 qui reçoit le mécanisme d'entraînement 16, comporte une partie centrale 22 raccordée à un clip d'accrochage 23 pour un cache supérieur 24 par l'intermédiaire de barrettes en matière plastique rigide 25, aptes à créer une rupture de pont thermique et ainsi à isoler l'extérieur de la toiture de l'intérieur du local situé sous cette dernière (Figure 4).

En outre et comme également illustré sur cette Figure, la face supérieure du châssis 21 de l'ouvrant 2 comporte des joints 26 venant porter contre le cache 24, pour assurer une étanchéité convenable au contact de l'ouvrant, lors des déplacements de ce dernier. Eventuellement, on pourrait inverser la position de ces joints.

Conformément à l'invention, le mécanisme d'entraînement 16 de l'ouvrant mobile 2 est disposé dans un logement ouvert 27 prévu dans le rail 15, à la partie supérieure de chaque chevron 11, de manière à ce que, une fois la toiture assemblée, ce mécanisme soit entièrement caché vis-à-vis de l'extérieur.

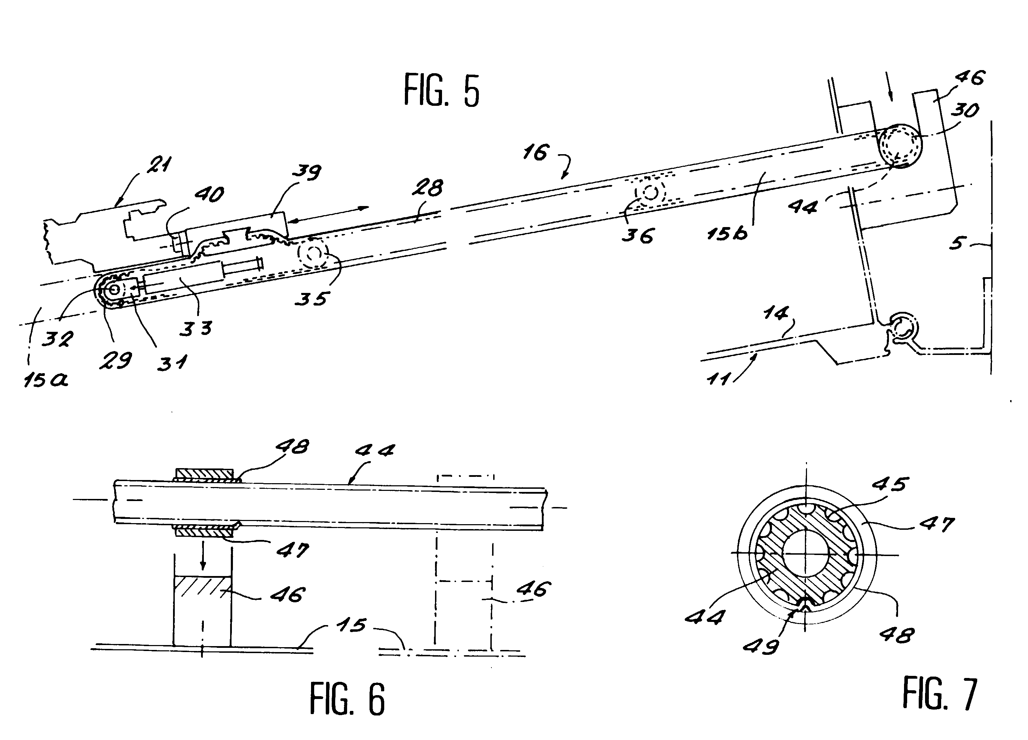

Comme représenté plus particulièrement sur la Figure 2 et en vue de détail sur la Figure 5, ce mécanisme se compose principalement d'une courroie de transmission 28, bouclée sur elle-même et comportant dans sa surface interne des crans 29, de manière à lui permettre de coopérer en permanence avec un pignon d'entraînement 30, qui est de préférence constitué par l'extrémité d'une barre d'entraînement 44 décrite ci-après, ce pignon étant disposé sous l'élément fixe 1 au voisinage du mur de soutènement 5, dans le prolongement de l'ouvrant 2.

La courroie crantée 28 est tendue à l'intérieur du logement 27 dans le rail 15 à la partie supérieure du profilé 14 du chevron 11, entre le pignon d'entraînement 30 et un second pignon 31, monté libre en rotation dans le bord opposé de la courroie, les pignons 30 et 31 ayant bien entendu des axes parallèles l'un à l'autre. Par ailleurs, l'axe 32 du pignon libre 31 est solidarisé d'un dispositif de mise sous tension 33 logé à l'intérieur de la courroie et permettant de maintenir ses deux brins parallèles l'un à l'autre, en permettant en outre à son brin supérieur 34 de constituer une surface d'appui convenable et notamment suffisamment rigide pour que l'ouvrant 2 vienne reposer sur ce brin lorsqu'il coulisse sous l'élément fixe 1 lorsque la toiture est mise en position ouverte.

Des pignons intermédiaires tels que 35 et 36 (Figure 5) libres en rotation, sont prévus et engrènent simultanément avec les crans 29 de la courroie 28 pour assurer le soutien de l'ouvrant entre les pignons d'extrémité 30 et 31.

Les extrémités 37 et 38 de la courroie 28 sont immobilisées par une pièce de jonction commune 39, laquelle est solidarisée par des vis 40 du châssis 21 de l'ouvrant, de telle sorte que les mouvements de la courroie dans une direction ou dans l'autre, à l'ouverture ou à la fermeture, selon le sens de la rotation du pignon d'entraînement 30, déterminent les déplacements de l'ouvrant 2 pour l'amener, soit sous l'élément fixe 1, soit au-delà et dans le prolongement de celui-ci.

Plusieurs galets lisses 41 sont également prévus à l'intérieur du rail 15, au-delà de la courroie 28, de manière à permettre de supporter l'ouvrant 2 au-dessus du rail lorsqu'il se déporte vis-à-vis du bord d'extrémité de la courroie dans son mouvement d'écartement par rapport à l'élément fixe 1. En outre, des butées, respectivement 42 et 43 (Figure 3), sont fixées dans le rail 15, dans des positions appropriées pour matérialiser les fins de course pour l'ouvrant 2, respectivement lors de la fermeture de la toiture ou de son ouverture maximale, lorsque cet ouvrant est totalement disposé sous l'élément fixe 1.

Dans l'exemple de réalisation plus spécialement considéré, le pignon d'entraînement 30 de chacune des courroies 28 montées dans l'un et l'autre des chevrons supérieurs 11 prévus des deux côtés de la structure de support 3, sont commandés par une barre de transmission commune 44, dont les extrémités constituent directement les pignons 30 précités, et qui s'étend transversalement à la toiture, parallèlement et au voisinage du mur 5 sous l'élément fixe 1 (voir Figure 1 et également Figure 6). Cette barre est totalement invisible de l'extérieur.

Avantageusement, les deux pignons 30 prévus de chaque côté de la toiture sont constitués directement par les extrémités de la barre de transmission 44, laquelle comporte à cet effet (Figure 7) des cannelures périphériques externes 45 destinées à venir en prise avec les crans 29 de la courroie 28. Dans ce cas, la barre est maintenue et guidée à l'extrémité haute de chaque chevron 11 dans un palier 46 (Figure 5) en U, une bague de frottement 47, notamment en bronze, dans laquelle tourne librement un coussinet de liaison 48 comportant deux crans 49 pour son immobilisation en rotation dans deux cannelures 45 de la barre.

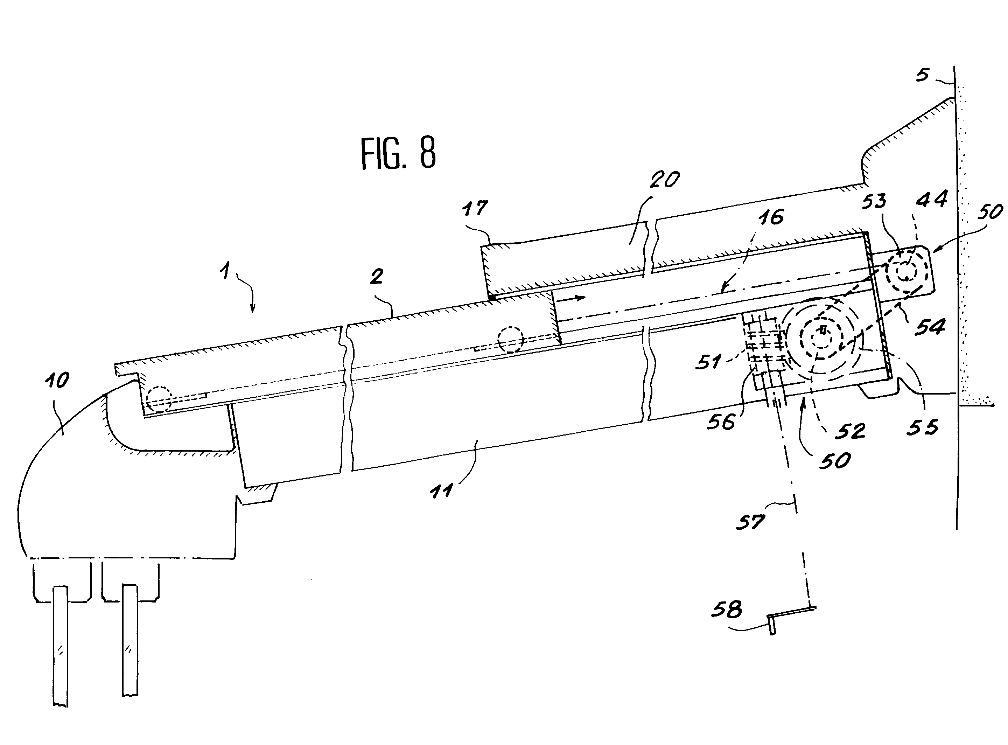

Grâce à ces dispositions, la barre de commande et de transmission 44 agit directement sur les courroies en conservant un sychronisme parfait d'un côté à l'autre de la toiture. Cette barre peut être de section réduite et logée au plus près du mur 5 au-dessus de la console d'accroche murale 6, en étant invisible de l'extérieur. Cette barre peut être commandée par tout mécanisme approprié, notamment à partir d'un ensemble moteur 50, avantageusement associé à un dispositif de commande manuelle 51, destiné à prendre la relève de ce moteur en cas de défaillance de celui-ci, le mouvement nécessaire au déplacement de l'ouvrant sur la structure de support par le pignon d'entraînement 30 étant dans ce cas transmis à celui-ci par un pignon de commande 52 et un pignon de renvoi 53, reliés par une chaîne de transmission 54, l'ensemble, schématisé seulement sur la Figure 2, étant explicité de façon plus détaillée sur les Figures 8 à 14 qui seront décrites plus loin.

La barre de commande 44 est maintenue et guidée par ses paliers 46, dont la conception simple permet une mise en place facile sur chantier, en évitant toute fixation complémentaire ou usinage sur place.

L'ouvrant est en permanence soutenu dans ses mouvements à la fois par les courroies crantées 28 prévues de chaque côté de l'élément fixe 1 par les galets crantés 36 et par les galets lisses 41 montés dans le rail au-delà de cet élément, les courroies restant en permanence tendues, quelle que soit la position de l'ouvrant se déplaçant au-dessus d'elles.

La mise en oeuvre d'un rail ouvert supporté par ou appartenant aux chevrons supérieurs 11 de la structure de support 4 permet de réduire considérablement les dimensions des profilés utilisés, notamment pour constituer les châssis 18 et 21 de l'élément fixe et de l'ouvrant, tout en permettant de dissimuler complètement les mécanismes de commande, lesquels peuvent néanmoins être aisément atteints pour réparation ou maintenance.

Les Figures 8 à 14 illustrent plus particulièrement le détail de la réalisation de l'ensemble moteur 50 qui entraîne le pignon de commande 52 et du dispositif à commande manuelle 51, permettant en cas de défaillance du moteur de suppléer celui-ci et d'éviter que l'ouvrant ne soit immobilisé en position non fermée.

Sur la Figure 8, on retrouve la structure de support de l'ouvrant et des différents moyens mis en oeuvre avec celui-ci, tels qu'ils ont été décrits précédemment en référence aux Figures 1 à 7 et qu'il est donc inutile de reprendre ici, les mêmes chiffres de référence pour les pièces essentielles, étant bien entendu utilisés.

Le dispositif de commande du pignon 30, fixé ou directement constitué par l'extrémité cannelée de la barre de transmission 44, comporte un moteur tubulaire (non représenté) sur la Figure 7, qui entraîne le pignon de commande 52, lequel entraîne à son tour le pignon 30 par l'intermédiaire du pignon de renvoi 53 et de la chaîne 54.

Le pignon de commande 52 est lui-même solidarisé d'une roue dentée 55 en prise avec une vis tangente 56, qui avec une tige d'entraînement 57 et une manivelle 58 constituent le mécanisme de commande manuelle 51.

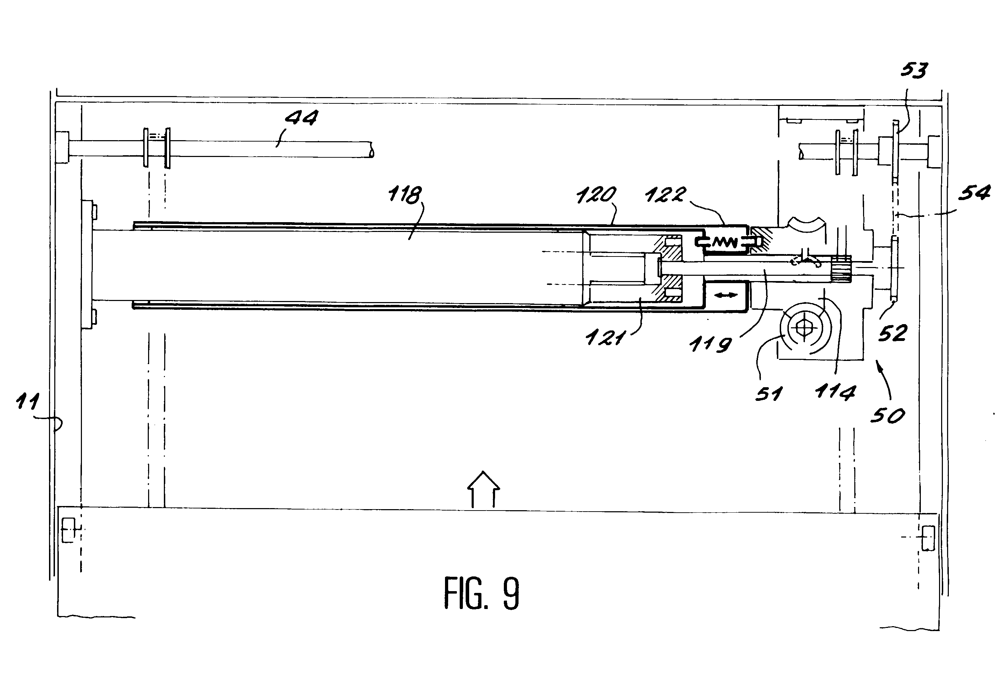

Sur la Figure 9, on a représenté le moteur tubulaire 118, permettant d'entraîner un axe 119 à l'extrémité duquel est fixé le pignon de commande 52, ainsi que, représentés très schématiquement, les moyens qui, conformément à l'invention, permettent d'entraîner ce pignon 52 par l'intermédiaire de son axe 119, soit au moyen du moteur 118, soit par le couple roue dentée-vis tangente 55, 56, en assurant le déplacement du panneau mobile en toutes circonstances, en particulier en cas de défaillance du moteur 118, par mise en oeuvre dans ce cas de la commande manuelle au moyen de la manivelle 58, cette commande manuelle pouvant à son tour être mise hors service dès que le moteur tubulaire est à nouveau capable de fonctionner.

A cet effet, le dispositif comporte un tube extérieur 120, à l'intérieur duquel est logé le moteur 118, une bague 121 également logée à l'intérieur du tube pour l'entraînement de l'axe 119 du pignon de commande 52 par ce moteur par l'intermédiaire du tube 120, un organe de couplage 122 solidaire du tube extérieur et propre, selon sa position axiale, à commander la rotation de l'axe 119, soit au moyen de la bague d'entraînement 121, soit grâce à la roue dentée 55.

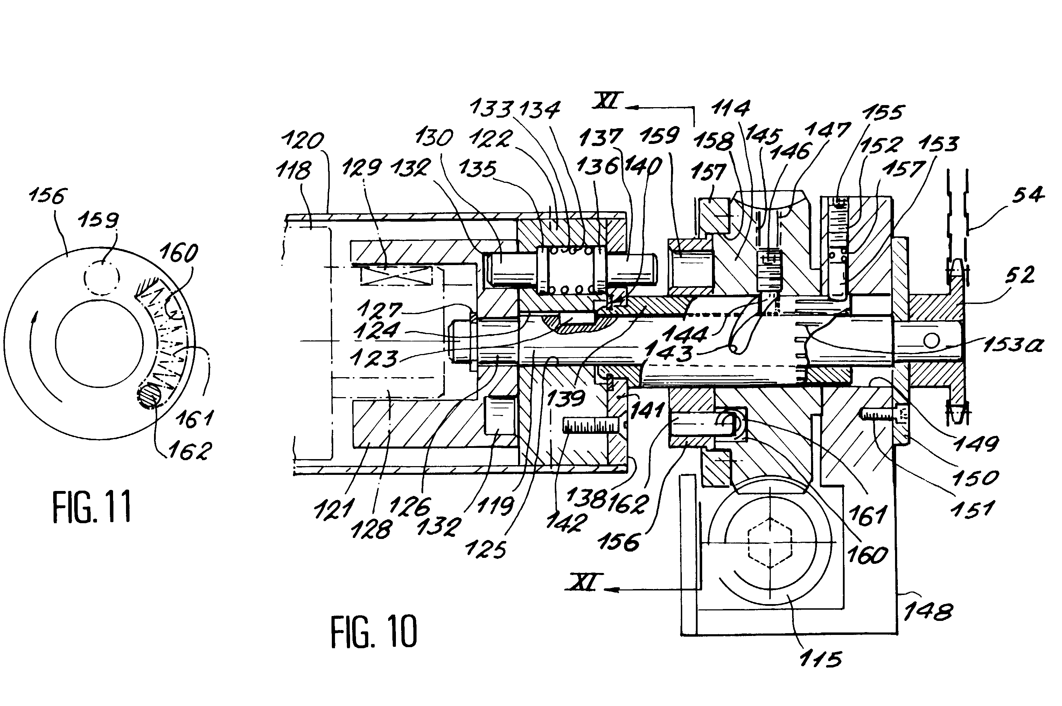

La Figure 10 illustre de façon plus détaillée la structure du dispositif considéré.

Sur cette Figure, on retrouve le moteur tubulaire 118, le tube extérieur 120, la bague d'entraînement 121 et l'organe de couplage 122, lequel est solidaire en rotation de l'axe 119 du pignon de commande 52 par l'intermédiaire d'une clavette 123 fixée sur l'axe selon une génératrice de celui-ci et apte à coulisser dans une rainure 124 prévue dans un alésage 125 ménagé au centre de la bague 121 et traversé librement par l'extrémité 126 de l'axe 119.

Sur cette extrémité 126, est montée la bague d'entraînement 121, arrêtée sur l'axe 119 par un circlips 127, cette bague présentant une forme de chape creuse en prise avec l'arbre de sortie 128 du moteur 118 par l'intermédiaire d'une clavette 129.

Dans la position illustrée sur la Figure 10, le moteur 118 entraîne donc la bague 121, laquelle est solidarisée en rotation de l'organe de couplage 122 et, par l'intermédiaire de ce dernier, du tube extérieur 120, qui à son tour commande, selon le sens de rotation du moteur 118, le déplacement dans un sens ou dans l'autre de l'ouvrant.

La liaison entre la bague d'entraînement 121 et l'organe de couplage 122 est dans ce cas réalisée au moyen d'un pion 130, porté par l'organe de couplage et faisant saillie vers l'extérieur de la face en regard 131 de ce dernier, ce pion étant engagé dans un logement creux 132 prévu dans le fond de la bague 121. Avantageusement, la bague d'entraînement 121 comporte une pluralité de tels logements 132 répartis de façon équidistante autour de l'axe 119, le pion 130 étant monté rétractable dans un alésage 133 de la bague, déporté radialement dans celle-ci par rapport à l'axe 119.

Un ressort 134 est monté dans l'alésage 133, derrière la tête 135 du pion 130 et en appui contre une tête similaire 136 d'un second pion 137, disposé dans le prolongement du premier mais faisant saillie vers l'extérieur de l'organe de couplage 122, dans la face 138 de celui-ci opposée à la face 131 précitée.

Sur l'axe 119 du pignon de commande 52 est monté coaxialement un manchon 139, apte à coulisser vis-à-vis de cet axe dans le sens longitudinal de celui-ci. Le manchon 139 est solidarisé en translation par un circlips 140 d'un flasque 141 qui ferme l'extrémité correspondante du tube extérieur 120 et qui est lié à l'organe de couplage 122 par des vis de blocage 142.

Le manchon 139 comporte une rainure en hélice 143 prévue dans sa surface externe, dans laquelle pénètre l'extrémité d'un téton 144, monté dans un alésage radial 145 de la roue dentée 55, ce téton étant prolongé par un embout fileté 146 en prise avec une zone taraudée 147 de l'alésage, de manière à permettre d'ajuster la position du téton 144 dans la rainure 143 sans empêcher la libre rotation de l'axe 119.

L'ensemble roue dentée 55-vis tangente 56 est logé dans un corps 148, solidaire de la structure de support 3, ce corps comprenant un passage 149 dans lequel sont montés l'axe 119 et le manchon 139 qui lui est coaxial. Le pignon de commande 52 est appuyé contre le corps 148, par l'intermédiaire d'une plaque de fermeture 150, qui obture le passage 149 et est solidarisée de ce corps par des vis 151.

Dans le corps 148, est prévu un trou radial 152 pour le montage d'un doigt de freinage 153, soumis à l'action d'un ressort 154 bloqué par une vis de réglage 155, ce doigt s'engageant dans une quelconque d'une pluralité de rainures longitudinales 153a ménagées dans la surface externe du manchon 139, coulissant sur l'axe 119.

L'équipement du dispositif se complète au moyen d'une bague de synchronisation 156, montée sur la surface externe du manchon coulissant 139 et libre en rotation par rapport à ce dernier. Cette bague est coaxiale à la roue dentée 55 et comporte une couronne périphérique 157 venant coiffer par l'extérieur une portée cylindrique de même diamètre 158, ménagée dans le côté correspondant de cette roue dentée 55.

La bague de synchronisation 156 comporte au moins un et de préférence deux logements creux 159, dont la direction s'étend parallèlement à l'axe 119, ces logements présentant un diamètre interne sensiblement égal à celui du second pion 137 porté par l'organe de couplage 122 et destiné à accommoder ce pion lorsque le tube extérieur 120 et l'organe de couplage 122 sont déplacés avec le manchon 139, de la gauche vers la droite sur le dessin de la Figure 10. Ce montage permet notamment de solidariser cet organe de couplage avec la bague de synchronisation, en même temps que ce même organe est désolidarisé de la bague d'entraînement 121, le premier pion 130 étant extrait du logement 132 dans lequel il était préalablement engagé.

Afin de réaliser la coïncidence entre le logement 159 et le pion 137 lorsque le tube extérieur 120 tourne sur lui-même vis-à-vis de la bague de synchronisation 156, la roue dentée 55 comporte une gorge périphérique 160 dans laquelle est logé un ressort de rappel 161 (Figure 11), lequel est en appui, d'une part contre le fond de cette gorge, et d'autre part est solidaire d'un pion 162, porté par la bague 156.

Dans ces conditions, le pion 137 de l'organe de couplage 122 est rétracté dans l'alésage 133 jusqu'à ce que, consécutivement à la rotation de la bague de synchronisation 156 sous l'effet du ressort 161, son extrémité vienne exactement en regard d'un logement 159 de la bague 156, le ressort 134 repoussant ce pion dans ce logement, en solidarisant alors l'organe de couplage 122 et la bague 156.

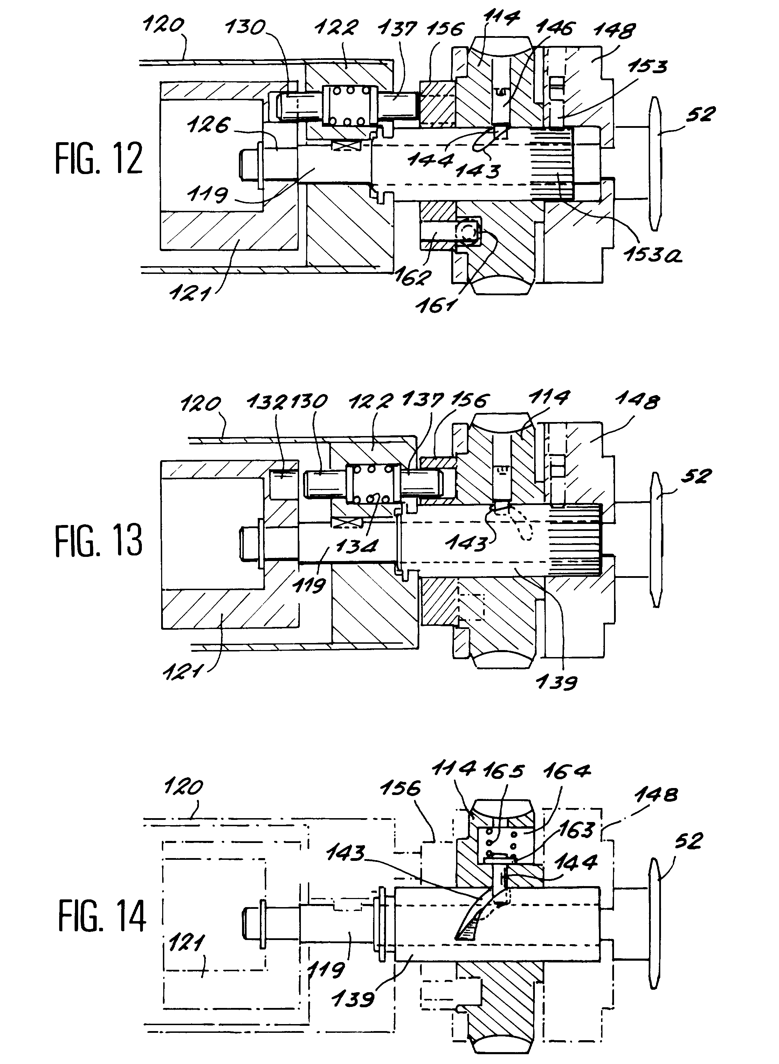

Les Figures 12 et 13 permettent de mieux voir comment est mis en oeuvre le dispositif selon l'invention pour solidariser le tube externe 120, soit avec le moteur tubulaire 118 par l'intermédiaire de la bague d'entraînement 121 et l'organe de couplage 122, soit avec le couple roue dentée 55-vis tangente 56, également par le même organe de couplage, mais consécutivement au déplacement longitudinal de celui-ci selon la direction de l'axe 119 du pignon 52.

Selon le cas, ce déplacement provoque l'engagement du pion 130 dans le logement 132 correspondant dans la bague d'entraînement 121, ou bien au contraire extrait ce pion de ce logement, en même temps que l'autre pion 137 vient pénétrer dans le logement 159 de la bague de synchronisation 156, en reliant alors directement le tube extérieur 120 à la roue dentée 55.

Le dispositif d'entraînement du pignon fonctionne notamment de la façon suivante, en considérant les opérations qui réalisent, soit l'embrayage de la commande manuelle par la manivelle 58 avec débrayage concomitant du moteur tubulaire 118, soit l'embrayage du moteur et simultanément la libération de la commande manuelle, qui reste alors inutilisée ou tout au moins tournant dans le vide.

Dans le premier cas, dans l'hypothèse d'une défaillance du moteur tubulaire 118, par exemple en cas de panne de son alimentation électrique, le déplacement de la partie mobile 3 doit être réalisé manuellement. A cet effet, la rotation de la roue dentée 55 est commandée par la manivelle 58 et la tige 57, par l'intermédiaire de la vis tangente 56.

De ce fait, la bague de synchronisation 156 entraînée par la roue 55, tourne sur le manchon 139. Le téton 144, dont la position est ajustée dans l'alésage 145 par la vis d'appui 146, pénètre dans la rainure hélicoïdale 143 du manchon 139.

Simultanément, le doigt 153, engagé dans une des rainures longitudinales 153a du manchon 139, immobilise ce dernier par rapport au corps 148, de telle sorte que le parcours du téton 144 dans la rainure en hélice 143, détermine le déplacement en translation de ce manchon 139 sur l'axe 119.

Dans ces conditions, l'organe de couplage 122 est déplacé de la gauche vers la droite sur le dessin, jusqu'au moment où le pion 137 faisant saillie à l'extérieur du flasque 141 fermant le tube extérieur 120, vient coopérer avec le logement 159 de la bague de synchronisation 156, le cas échéant après une rotation relative mais limitée de cette bague vis-à-vis de la roue dentée 55 avec compression plus ou moins notable du ressort 161, afin d'amener en regard du pion 137 le logement 159 le recevant, en solidarisant la bague 156 avec l'organe de couplage 122 et par suite le tube extérieur 120.

Dans cette position, la roue dentée 55 entraîne directement le tube 120 et par suite transmet à celui-ci le mouvement du pignon de commande 52, l'ouverture ou la fermeture de l'élément mobile 2 de la toiture étant ainsi commandée manuellement.

A noter que lors du déplacement du manchon 139 réalisé par le téton 144 dans la rainure hélicoïdale 143, le pion 137 peut être dans une position où il est angulairement décalé par rapport au logement 159, ce pion étant repoussé dans ce cas à l'intérieur de l'alésage 133 de l'organe de couplage 122 en comprimant le ressort 134.

Dans cette hypothèse, la bague de synchronisation 156 peut se déplacer relativement par rapport à la roue dentée 55 sous l'effet du ressort 161 monté dans la gorge 160, jusqu'à ce que précisément le pion 137 se trouve en regard du logement 159 dans lequel il s'engage alors, comme décrit ci-dessus.

Lorsque le moteur tubulaire est à nouveau apte à fonctionner, notamment lorsque son alimentation électrique est à nouveau disponible ou plus généralement lorsque la cause de son arrêt est éliminée, on procède au débrayage de la commande manuelle et à l'embrayage du moteur, en entraînant la roue dentée 55 en sens inverse par l'intermédiaire de la tige 57 et de la manivelle 58 et la commande de cette roue au moyen de la vis tangente 56.

Le téton 144 décrit alors la rainure en hélice 143 en sens inverse dans le manchon 139, lequel est immobilisé en rotation par le doigt de freinage 153.

Il en résulte un déplacement en translation, cette fois de la droite vers la gauche sur le dessin du manchon 139, qui entraîne dans la même direction l'organe de couplage 122. Dans ce mouvement, le pion 137 se dégage de son logement 159 dans la bague de synchronisation 156, tandis que le pion 130 opposé vient s'engager dans un logement 132 de la bague d'entraînement 121, en couplant à nouveau l'axe 119 et le moteur linéaire 118.

Dans le cas où le logement 132 n'est pas en coïncidence directe avec le pion 130, le ressort 134 se comprime jusqu'au moment où, du fait de l'entraînement de la bague 121 par la commande du fonctionnement du moteur 118, cette mise en regard du pion et de son logement est réalisée, accouplant alors l'organe 122 et la bague 121.

Dans une variante de réalisation, illustrée sur la Figure 14, le pion 144 qui pénètre danns la rainure 143 du manchon 139 est réalisé de manière différente et en particulier n'est plus bloqué dans un alésage fileté de la roue dentée, au moyen d'une vis d'immobilisation. De même, dans cette variante, le manchon 139 est lisse et ne comporte plus de rainures longitudinales pour coopérer avec un doigt de freinage comme dans l'exemple précédemment décrit, mais une rainure de clavette (non représentée), interdisant la rotation du manchon 139 vis-à-vis du corps 148.

Le pion 144 comporte ici une tête 163, montée dans un évidement 164 de la roue dentée 55, cette tête étant soumise en permanence à la poussée d'un ressort 165, disposé dans ce même évidement au-dessus de la tête, de telle sorte que, lorsque le pion parcourt la rainure hélice 143, il puisse s'échapper de celle-ci à son extrémité, en comprimant le ressort 165, le manchon 139 étant alors libre en rotation avec la roue 55.

La mise en oeuvre du dispositif est dans ce cas tout à fait similaire à celle déjà décrite, notamment en ce qui concerne, selon le sens de déplacement du manchon par rapport à la roue dentée, la solidarisation obtenue entre l'organe de couplage 122 et par suite le tube extérieur 120, soit avec la bague d'entraînement 121 pour la commande du mécanisme par le moteur 118, soit avec la bague de synchronisation 156 et la roue dentée 55 pour la commande manuelle par l'intermédiaire de la vis tangente 56, de la tige 57 et de la manivelle 58.

On réalise ainsi un dispositif d'entraînement pour un pignon de commande assurant le déplacement dans un sens ou dans l'autre d'un panneau coulissant de conception simple, présentant une grande sûreté de fonctionnement.

En cas d'arrêt du moteur, celui-ci conserve ses mémoires de fin de course, qui peuvent donc être retrouvées telles quelles lorsque, après usage de la commande manuelle, le mécanisme est à nouveau embrayé sur le moteur lorsque celui-ci est remis en état de marche.

L'ensemble présente un encombrement limité, permettant de le loger facilement à l'extrémité du moteur tubulaire lui-même et de son tube extérieur de commande du panneau mobile. En outre, la conception du système est telle que, quel que soit le mode d'entraînement (manuel ou motorisé), le même mouvement réalise le désaccouplement du moteur et l'accouplement du treuil manuel ou vice versa.

Bien entendu, il va de soi que l'invention ne se limite pas à l'exemple plus spécialement décrit et représenté ; elle en embrasse au contraire toutes les variantes.

En particulier, cet exemple a plus spécialement considéré le cas où l'élément fixe et l'ouvrant repose sur deux chevrons 11, parallèles et disposés de part et d'autre de la toiture. On pourrait toutefois envisager d'autres solutions, dans lesquelles cette toiture est formée de plusieurs ouvrants voisins, tels que ceux désignés sous les références 2 et 2' sur la Figure 4, avec un chevron intermédiaire 11' entre eux, chaque ouvrant étant associé à un mécanisme de commande manoeuvré en synchronisme, tels que 16 et 16' sur cette même Figure, toutes les courroies de commande étant entraînées à partir de la barre de transmission commune 44, de la manière déjà décrite.

## Revendications

1. Dispositif de commande pour toiture à ouvrant mobile, comportant une structure (3) de support et d'appui au-dessus du sol d'un élément de couverture fixe (1), de forme générale plane, de préférence réuni selon un de ses côtés à un mur porteur vertical (5) contre lequel s'applique la structure, et un ouvrant mobile (2), parallèle à l'élément fixe, apte à coulisser sur la structure de support pour se disposer sous l'élément fixe en position d'ouverture de la toiture ou dans le prolongement de celui-ci en position de fermeture, sous l'effet d'un mécanisme de commande (16) porté par la structure de support et provoquant le déplacement de l'ouvrant vis-à-vis de l'élément fixe, caractérisé en ce que, de chaque côté de la toiture, la structure de support comporte sous l'élément fixe un chevron supérieur (11) d'un seul tenant, supportant un profilé (14) comportant au moins un rail (15), délimitant un logement ouvert (27) recevant une courroie crantée (28), bouclée sur elle-même et coopérant avec un pignon d'entraînement (30) prévu à l'extrémité d'une barre de commande et de transmission transversale (44), s'étendant parallèlement au côté de l'élément fixe réuni au mur porteur et au voisinage de celui-ci, les extrémités de la courroie étant solidarisées l'une et l'autre à une pièce de jonction commune (39), fixée à l'ouvrant, de telle sorte que le mouvement du pignon entraînant la courroie provoque le déplacement de la pièce de jonction vis-à-vis du rail et par suite le mouvement de l'ouvrant qui glisse dans le logement ouvert du rail sous l'élément fixe, en s'appuyant sur la courroie supportée par les galets crantés, logée à l'intérieur de ce rail.

2. Dispositif selon la revendication 1, caractérisé en ce que le rail (15) formé dans le profilé creux (14) du chevron supérieur (11) comporte au moins un et de préférence plusieurs galets lisses (41) d'appui pour l'ouvrant (2) dans son mouvement vers ou à partir de l'élément fixe (1).

3. Dispositif selon l'une des revendications 1 ou 2, caractérisé en ce que le rail (15) du profilé creux (14) est isolé de l'ouvrant (2) par des moyens (25) propres à assurer une rupture de pont thermique, du type à barrettes plastiques ou autres.

4. Dispositif selon l'une quelconque des revendications 1 à 3, caractérisé en ce que la courroie de commande crantée (28), logée à l'intérieur du rail (15) du profilé creux (14) du chevron (11) est en prise d'une part avec le pignon d'entraînement (30), et d'autre part avec un second pignon (31), d'axe (32) parallèle à celui du pignon d'entraînement, ce second pignon étant monté libre en rotation et associé à un mécanisme de tension (33) de la courroie par déplacement de cet axe.

5. Dispositif selon l'une quelconque des revendications 1 à 4, caractérisé en ce que le pignon d'entraînement (30) est directement constitué par l'extrémité de la barre de commande et de transmission (44), qui présente extérieurement un profil muni de cannelures (45).

6. Dispositif selon l'une quelconque des revendications 1 à 5, caractérisé en ce que la toiture comporte deux pignons d'entraînement (30) en prise respectivement de chaque côté avec deux courroies crantées homologues (28), de manière à assurer un déplacement de l'ouvrant mobile (2) qui reste toujours perpendiculaire à la direction de la barre de commande (44) et parallèle aux rails (15) des profilés creux (14) des chevrons supérieurs (11).

7. Dispositif selon la revendication 6, caractérisé en ce que la barre de commande et de transmission (44) est supportée à chacune de ses extrémités latérales dans un palier lisse en U (46), monté dans le rail (15) et recevant une bague de frottement (47) entourant un coussinet (48) muni d'un cran de liaison (49) avec au moins une cannelure (45) de la barre.

8. Dispositif selon l'une quelconque des revendications 1 à 7, caractérisé en ce que le rail (15) comporte à chacune de ses extrémités une butée fixe (42, 43) d'arrêt de l'ouvrant (2) en fin de course.

9. Dispositif selon l'une quelconque des revendications 1 à 8, caractérisé en ce que le rail (15) est constitué de deux demi-rails (15a, 15b) dans le prolongement l'un de l'autre, respectivement au droit de l'élément fixe (1) et de l'ouvrant mobile (2) en position de fermeture de la toiture, le demi-rail disposé sous l'élément fixe comportant une cloison verticale (15a) pour le soutien de cet élément.

10. Dispositif selon la revendication 9, caractérisé en ce que le demi-rail inférieur (15b) est muni d'un cache supérieur amovible (24), apte à être fixé par clip (23) ou analogue sur ce demi-rail, afin de coiffer l'ouvrant (2) par le dessus de celui-ci, l'ouvrant comportant des joints d'étanchéité (26) glissant sur le cache ou vice-versa.

11. Dispositif selon l'une quelconque des revendications 1 à 10, caractérisée en ce que le pignon d'entraînement (30) est mis en mouvement par un pignon de commande (52) au moyen d'un moteur tubulaire (118) muni d'organes de fins de course propres à arrêter et inverser son sens de rotation, ce moteur étant logé dans un tube extérieur (120) comportant une bague d'entraînement (121) pour un axe (119) portant le pignon de commande (52) et un organe de couplage interne (122) solidaire du tube extérieur, caractérisé en ce que l'organe de couplage (122) comprend des moyens de liaison (130, 137), soit avec la bague d'entraînement (121) de l'axe, soit avec une roue dentée (55) à commande manuelle au moyen d'une vis tangente (56), elle-même commandée par une manivelle (58), le dispositif comprenant également un manchon (139) coaxial à l'axe et entourant celui-ci qui peut librement tourner dans ce manchon, lequel est solidaire en translation de l'organe de couplage (122) et apte à se déplacer par rapport à la direction de cet axe sous l'effet d'un téton (144) porté par la roue dentée et coopérant avec une rainure en hélice (143) prévue dans le manchon, de telle sorte que, selon le sens de la rotation de la roue provoqué par la vis tangente, l'organe de couplage solidarise le tube extérieur, respectivement de la roue dentée ou de la bague d'entraînement.

12. Dispositif selon la revendication 11, caractérisé en ce que l'organe de couplage (122) entraînant l'axe (119) en rotation présente deux faces parallèles (131, 138) opposées, perpendiculaires à cet axe et comporte, sur chacune de ces deux faces, au moins un pion en saillie (130, 137) vers l'extérieur de l'une et de l'autre, en regard de la bague d'entraînement (121) d'une part et de la roue dentée (55) d'autre part.

13. Dispositif selon la revendication 12, caractérisé en ce que les pions en saillie (130, 137) de l'organe de couplage (122) sont logés dans un alésage transversal (133) de cet organe, déporté radialement par rapport à l'axe du pignon (52) et sont soumis en permanence à l'effet d'un ressort de poussée (134) vers l'extérieur de l'alésage.

14. Dispositif selon l'une quelconque des revendications 11 à 13, caractérisé en ce que la bague d'entraînement (121) comporte une pluralité de logements équidistants (132) ou une fente continue en arc de cercle, ces logements étant répartis autour de l'axe de manière à recevoir dans l'un d'entre eux le pion en regard (130) de l'organe de couplage (122) et solidariser cette bague de cet organe.

15. Dispositif selon l'une quelconque des revendications 11 à 13, caractérisé en ce que la roue dentée (55) est associée à une bague de synchronisation (156) montée libre en rotation sur la surface externe du manchon (139) et apte à être solidarisée de la roue par un doigt (162) porté par cette bague, engagé dans une rainure en arc de cercle (160) de la roue, contenant un ressort de rappel (161) en appui latéral sur ce doigt pour provoquer la rotation relative de la bague de synchronisation (121) par rapport au manchon (139) coaxial à l'axe, cette bague de synchronisation comportant dans sa face opposée à la roue un ensemble de trous (159) pour recevoir le second pion en regard (137) de l'organe de couplage (122).

16. Dispositif selon l'une quelconque des revendications 11 à 15, caractérisé en ce que la roue dentée (55) présente un alésage interne (145), radial, fileté, propre à recevoir le téton de commande (144) du déplacement du manchon (139), ce téton portant extérieurement un pas de vis correspondant au filetage de l'alésage et ayant son extrémité engagée dans la rainure en hélice (143) du manchon, de manière que la rotation de la roue par rapport au manchon se traduise par un déplacement axial de celui-ci, dans un sens ou dans l'autre, selon la direction de cette rotation.

17. Dispositif selon la revendication 16, caractérisé en ce que le manchon (139) comporte un ensemble de rainures longitudinales (153a), réparties dans sa surface externe, ces rainures étant ménagées du côté de la roue dentée (55) opposée à la bague de synchronisation (156) et étant destinées à recevoir un doigt de freinage (153), porté par un corps cylindrique (148) solidaire de la structure de support, et dans un logement transversal duquel est montée la roue dentée, ce corps étant muni d'un passage évidé axialement recevant le manchon consécutivement à son déplacement sous l'effet du téton de commande, ce corps supportant en outre la vis tangente (56) de commande de cette roue.

18. Dispositif selon la revendication 11, caractérisé en ce que le téton de commande (144) porté par la roue dentée (55), coopérant avec la rainure en hélice (143) du manchon (139), comporte une tête (163) logée dans un évidement (164) de la roue dentée décalé par rapport au manchon, et soumise à l'effet de poussée d'un ressort radial (165), monté dans cet évidement, de telle sorte que, à la fin du déplacement du manchon par rapport à l'axe (119), l'effort exercé sur le téton par l'extrémité de la rainure en hélice provoque un effacement de ce téton dans l'évidement hors de la rainure, en comprimant le ressort radial.
